# EUROPEAN PATENT APPLICATION

(11) **EP 0 919 435 A2**
(43) Date of publication of application: **02.06.1999**
(21) Application number: 98309750.2
(22) Date of filing: 27.11.1998
(51) Int. Cl.: B60R 3/02

(54) **Caravan step unit**

(30) Priority: 28.11.1997 GB 9725208
(71) Applicant: Laud, David John, Redmarshall, Stockton-on-Tees TS21 1HT (GB)
(72) Inventor: Cunningham, Anthony William, Redmarshall, Stockton-on-Tees TS21 1HY (GB)
(74) Representative: Virr, Dennis Austin

(57) **Abstract**

A step unit devised to assist the user in entering or leaving a caravan comprises a generally flat frame (10) with means (21, 22) for attaching the frame to the chassis (23, 24) of a caravan, and a generally flat step (17), which is slidable relative to the frame between a retracted position in which it may remain wholly under the caravan and an extended position, beyond the limits of the chassis, in which it is able to assist the user to enter or leave the caravan.

## Description

The present invention is a step unit devised to assist the user in entering or leaving a caravan.

Regular users of caravans will be familiar with the difficulties which can arise in entering or leaving a caravan at the site of use. The height of the entrance door above ground level is very dependent upon the nature of the ground itself. Particularly at casual country sites, the ground surface may be irregular, with the result that the height of the doorway above the ground may vary between different sites. Even on a flat site, the height is usually sufficient to present difficulties to all but the more agile users.

In an attempt to meet this problem, loose steps are often carried within the caravan, for placing on the adjacent ground at the site of use. Particularly in the case of smaller caravans, such loose steps, which necessarily are relatively large if they are to be reasonably stable in use, take up valuable space within the caravan. More importantly, the stability of such loose steps is very dependent upon the stability of the ground upon which they are placed. Thus even a physically mobile user must use such a loose step with care, in particular when stepping out and down from the caravan. Older or less mobile users find leaving a caravan using a step of this type to be a particularly difficult exercise.

It is an object of the present invention to provide a caravan step unit by means of which at least some of the difficulties associated with such existing forms of step are reduced or eliminated.

The caravan step unit according to the present invention comprises a generally flat frame, means for attaching the frame to the chassis of a caravan, and a generally flat step slidable relative to the frame between a retracted position and an extended position in which it lies beyond the limits of the chassis.

As will readily be understood, the caravan step unit according to the present invention is able to remain wholly under the caravan until it is required for use and then, when the caravan is stationary, the step itself may be extended below the caravan doorway and will then be at a fixed distance below the doorway. That is, the user is provided with a stable step at a fixed level on to which to descend or from which to enter the caravan.

The frame by which the step unit is mounted upon the caravan chassis is generally flat in form. At its simplest it may be generally rectangular, comprising two linear guide members which in use are mounted transverse to the length of the caravan and two or more cross members by means of which the guide members are supported in parallel. The guide members may each be of hollow closed section, for example tubular or of square cross-section, or may be of open channel section, with the channels either facing away from each other or, more preferably, facing towards each other.

The step unit according to the invention is suitable for installation before delivery of the caravan but has the particular advantage that it is suitable for installation (and possibly subsequent removal) at a later date by the owner of a caravan already in use, for example if the circumstances of usual use of the caravan change and/or if a user becomes less mobile. To that end, it is preferred that the attachment means by which the frame is secured to the caravan chassis allow the frame to be detached again at a later date. Thus, for example, the attachment means preferably comprises two or more clamps, by which the frame may be reversibly secured to the longitudinal chassis members. Such clamps may be an integral feature of the step unit frame or may be attachable to that frame. It is particularly preferred that the points of mounting of the attachment means be variable relative to the frame, in order to enable the step unit to accommodate different spacings of the longitudinal chassis members.

While other forms of attachment means to secure the frame to the caravan chassis are possible within the scope of the present invention, for example the frame may be bolted direct to the chassis, such other forms are less preferred in that either they may put at risk the integrity of the chassis or they may not enable subsequent removal of the step unit.

The step also is of generally flat configuration and is therefore able to fit, within the frame, close to the underside of the caravan so as to intrude to a minimum extent upon the ground clearance below the caravan. Preferably the step is of a light construction compatible with supporting at least one adult person. For example, the step may be of an open texture such as of an expanded metal.

The step may itself fit within the area of the frame, that is it may engage guide rails forming a part of the frame, but in a preferred form of the invention the step may be carried by supports which themselves engage the frame. For example, when the frame comprises linear guide members of hollow or channel section, the step may be carried by supports extending into engagement with the guide rails.

When the step is carried upon linear supports as mentioned above, it may be mounted unsymmetrically upon the supports, for example offset laterally relative to their length. In this way the frame may be secured to the chassis in a position which is not aligned with the caravan doorway, while the step itself is aligned with the doorway. This arrangement may similarly accommodate a step which is wider than the step frame.

In one form of the invention, the step itself may be mounted upon a pair of supports in such a way as to permit adjustment of the height of the step relative to the supports. In this way, the height of the step above the ground may be modified.

The step may if desired be foldable, so that its area may be increased when it has been brought into its extended position and reduced again when it is subsequently to be stowed. A supplemental optional second step may also be provided.

At least one handrail may be provided, and if desired two such handrails, for use when the step is extended. Such a handrail may be designed to be slotted into engagement with the step or may be foldably secured upon the step, for erection after the step has been extended.

The step may be securable in its extended condition and/or in its retracted position, for example by one or more pins, preferably sprung pins, adapted to engage a corresponding slot or slots in the frame. Additional retainer means may be provided, for example a bolt or other form of stop, to ensure that the step does not extend while the caravan is travelling, for example if a sprung pin fails.

The invention will now be further described with reference to the accompanying drawings, which illustrate, by way of example only, one preferred embodiment of the caravan step unit according to the present invention and wherein:-
Fig.1 is a plan view of the unit in its retracted condition;
Fig.2 is a corresponding view of the unit in its extended condition; and
Fig.3 is an elevation from the rear of the unit as installed upon a caravan.

The illustrated step unit comprises a frame 10 constructed from two tubular steel guide members 11, 12 which are held in mutual parallel by cross-members 13, 14. Slidably mounted within the guide members 11, 12 and extending from one end of those members are two supports 15, 16, across the outer ends of which a step 17 is mounted. The step is of a strong, lightweight metal structure, for example of an open, expanded metal material. An arm 18, extending from the guide member 12, carries a sprung pin 19, which engages holes in the support 16 in the limiting retracted and extended positions of the step 17.

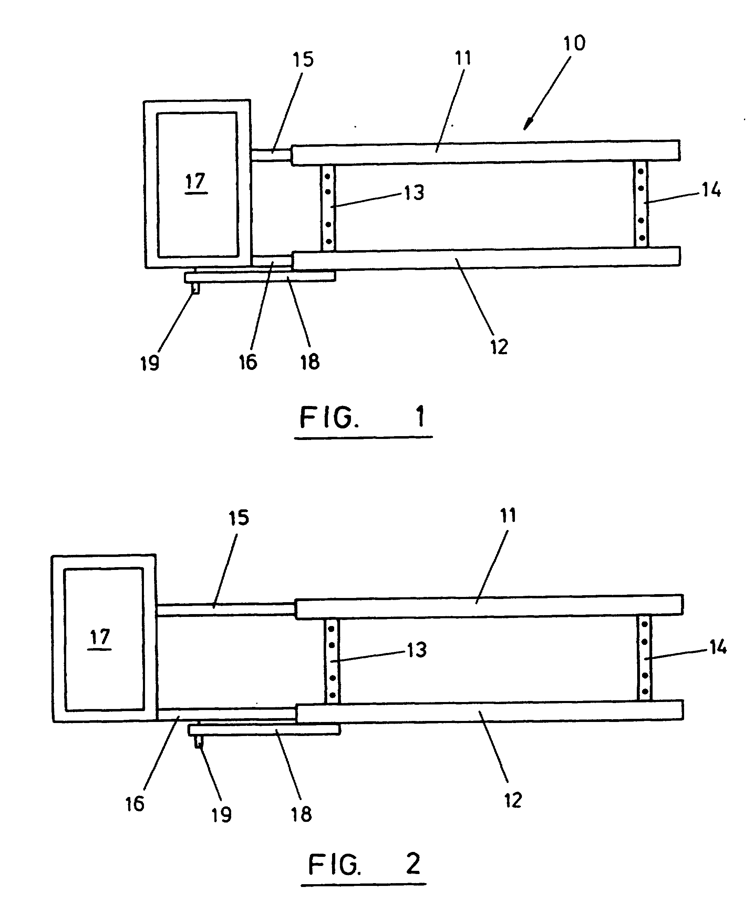

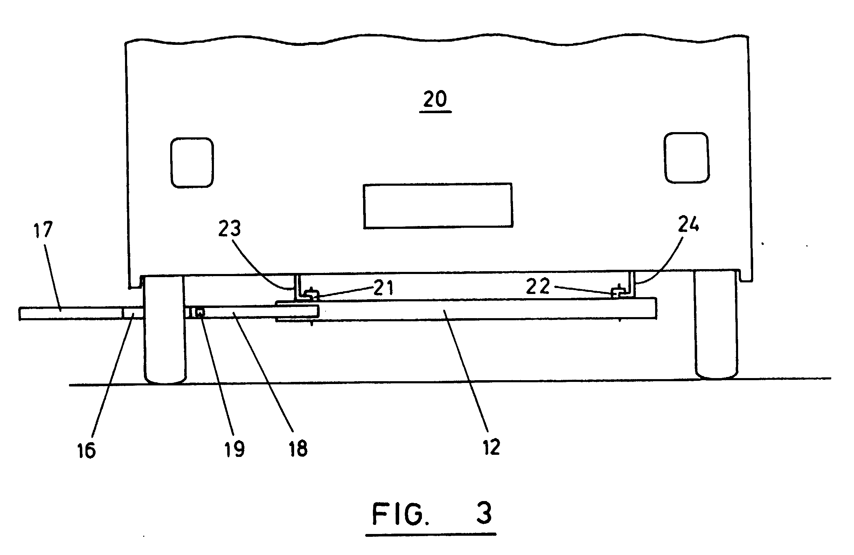

As illustrated in Fig.3, the frame 10 of the step unit is secured below the chassis of a caravan 20 by means of clamps 21, 22 engaging longitudinal chassis members 23, 24 respectively. When the step 17 is in its retracted position, the whole step unit lies within the limits of the caravan body. However, when the step is extended into the position shown in Figs. 2 and 3, it lies at a fixed height below the adjacent caravan doorway. In both of these limiting positions of the step, it is held against involuntary or accidental movement by the sprung pin 19.

If desired, the illustrated unit could be modified to allow adjustment of the height of the step relative to the supports 15, 16 when the latter are extended. As a further modification, a second step could be provided, either by folding down a part of the step 17 or as a demountable attachment to the step.

One or two handrails (not shown) may be provided if desired, for mounting upon the side(s) of the step 17 in its extended condition. Alternatively, such handrail(s) may be erected by folding upwardly from the step.

## Claims

1. A caravan step unit characterised in that it comprises a generally flat frame (10), means (21, 22) for attaching the frame to the chassis (23, 24) of a caravan, and a generally flat step (17) slidable relative to the frame between a retracted position and an extended position in which it lies beyond the limits of the chassis.

2. A caravan step unit according to Claim 1, characterised in that the generally flat frame (10) comprises two linear guide members (11, 12), each of an open channel section, and two or more cross-members (13, 14).

3. A caravan step unit according to Claim 1 or Claim 2, characterised in that the means for attaching the frame to the chassis of a caravan comprises two or more clamps (21, 22).

4. A caravan step unit according to any of the foregoing claims, characterised in that the points of mounting of the attachment means (21, 22) are variable relative to the frame (10).

5. A caravan step unit according to any of the foregoing claims, characterised in that the step (17) is carried by supports (15, 16) which engage the frame (10).

6. A caravan step unit according to Claim 5, characterised in that the step (17) is carried by supports (15, 16) which extend into engagement with linear guide members (11, 12) of hollow or channel section.

7. A caravan step unit according to Claim 6, characterised in that the step (17) is mounted offset laterally relative to the length of the supports (15, 16).

8. A caravan step unit according to Claim 6 or Claim 7, characterised in that the mounting of the step (17) upon the supports (15, 16) permits adjustment of the height of the step relative to the supports.

9. A caravan step unit according to any of the foregoing claims, characterised in that the step (17) is foldable.

10. A caravan step unit according to any of the foregoing claims, characterised in that it comprises also at least one handrail.

11. A caravan step unit according to any of the foregoing claims, characterised in that the step (17) is securable in its extended condition and/or in its retracted position.
